# EUROPÄISCHE PATENTANMELDUNG

(11) **EP 1 180 703 A1**
(43) Veröffentlichungstag der Anmeldung: **20.02.2002**
(21) Anmeldenummer: 00202840.5
(22) Anmeldetag: 11.08.2000
(51) Int. Cl.: G02B 6/42

(54) **Optoelektronischer Wandler mit federnder Lagerung für optischen Sender und Empfänger**

(71) Anmelder: Delphi Technologies, Inc., Troy, MI 48007 (US)
(72) Erfinder: Halbach, Paul, 42369 Wuppertal (DE); Gärtner, Markus, 42855 Remscheid (DE)
(74) Vertreter: Denton, Michael John

(57) **Zusammenfassung**

Die Erfindung betrifft einen optoeelektronischen Wandler 1 fuer die Wandlung optischer Signale in elektrische Signale und / oder umgekehrt, mit einem Gehaeuse 2, mit wenigstens einem gehaeusefesten optischen Anschluss 3,4 und mit wenigstens einem elektrischen Anschluss 5,6 fuer den Eingang und den Ausgang von jeweils in dem Wandler 1 umgesetzten elektrischen und / oder optischen Signalen, sowie mit einem in dem Gehaeuse 2 angeordneten optoelektronischen Modul 7,8, welches wenigstens einen optoelektronischen Chip 9,10 aufweist.

Es besteht die Aufgabe, einen verlustarmen Wandler 1 mit Eignung fuer Kraftfahrzeuganwendungen zu schaffen.

Die Aufgabe wird erfindungsgemaess geloest durch ein bewegbar in dem Gehaeuse 2 angeordnetes optoelektronisches Modul 7,8 welches in Richtung auf den optischen Anschluss 3,4 federnd vorgespannt ist, so dass ein axialer Abstand zwischen dem optoelektronischen Chip 9,10 und dem optischen Anschluss 3,4 automatisch minimiert wird.

## Beschreibung

Die Erfindung betrifft einen optoelektronischen Wandler mit den Merkmalen des Oberbegriff des Patentanspruch 1. Derartige Wandler sind, beispielsweise zur Datenuebertragung in unterschiedlichen Anwendungen, grundsaetzlich bekannt und dienen der Wandlung elektrischer Signale in optische Signale und / oder umgekehrt.

Die optische Uebertragung von Daten zeichnet sich einerseits durch einen hohen Datendurchsatz und andererseits durch eine hohe Stoerungsresistenz aus. So tritt beispielsweise keine Stoerung auf, selbst wenn starke elektromagnetische Feldeinstreuungen auf einen optischen Leiter einwirken. Fuer eine zuverlaessige Funktion ist es jedoch erforderlich, dass eine gute Verbindung zwischen einem Ende eines optischen Datenleiters (Ferrule) auf der einen Seite, und einem Wandler auf der anderen Seite vorliegt. Die Einkoppelung der optischen Signale wird insbesondere im Fahrzeugbau durch rauhe Umgebungsbedingungen (Erschuetterung, Schmutz, Temperatur) erschwert.

Es ist daher eine Aufgabe der vorliegenden Erfindung, bekannte Wandler derart zu verbessern, dass sie auch fuer Grossserienanwendungen im Kraftfahrzeugbau geeignet sind.

Weitere Einzelheiten und Ausfuehrungsbeispiele der Erfindung gehen aus Unteranspruechen im Zusammenhang mit der Beschreibung und der Zeichnung hervor. In der Zeichnung zeigt jeweils in perspektivischer Ansicht:
Fig. 1: ein optoelektronisches Modul,
Fig. 2: zur Verdeutlichung ein optoelektronisches Modul in einem transparenten Gehaeuse,
Fig. 3: ein Gehaeuse mit Modul wie in Fig. 2 in anderer Ansicht,
Fig. 4: eine Explosionszeichnung einer anderen Ausfuehrungsform.

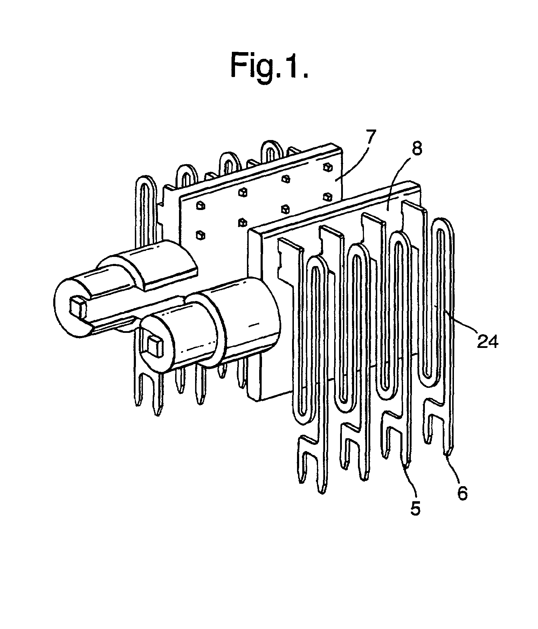

Ein optoelektronischer Wandler 1 umfasst gemaess den Figuren 1 bis 3 ein Gehaeuse 2 mit jeweils zwei optischen Anschluessen 3,4 und jeweils zwei elektrischen Anschluessen 5,6 sowie zwei in dem Gehaeuse 2 angeordneten optoelektronischen Modulen 7,8 mit jeweils einem optoelektronischen Chip 9,10. Grundsaetzlich werden die optoelektronischen Module 7,8 paarweise vorgesehen. Ganz grundsaetzlich kann es jedoch auch angezeigt sein, ein einzelnes Modul 7,8 oder eine ungerade Anzahl von Modulen 7,8 in dem Gehaeuse 2 vorzusehen, ohne die Erfindung zu verlassen. Eine bevorzugte Anwendung liegt im Kraftfahrzeug-Hi-Fi-Bereich oder auch im Kraftfahrzeug-Multimedia-Bereich (Verknuepfung von beispielsweise Radio, TIM (Traffic Information Management), CD- und/oder DVD-Media, Mobiltelefon, GPS (Naviagationssystem)) weil bei derartigen Anwendungen und insbesondere deren Verknuepfung in einem Kraftfahrzeug hohe Datenstroeme zu bewaeltigen sind. Jedenfalls ist jedem optischen Anschluss 3,4 in jedem Fall ein elektrischer Anschluss

5,6 mit mindestens zwei elektrischen Adern (mit positiver und negativer Polung) fuer den jeweiligen optoelektronischen Chip 9,10 zugeordnet. Jeder Chip 9,10 dient grundsaetzlich zwei unterschiedlichen Funktionen. Sofern ein optisches Eingangssignal anliegt, erfolgt die Umwandlung in ein elektrisches Signal. Andererseits wird ein optisches Ausgangssignal emittiert, wenn am Eingang ein elektrisches Signal ansteht. Beispielhaft ist fuer die Umwandlung elektrischer Signale in Lichtsignale eine robuste

Leuchtdiode (LED) vorgesehen. Jeder Wandler 1 kann generell mehrere Module 7,8 aufweisen, welche jweils unterschiedliche oder wechselnde Betriebsmodi besitzen.

Um die Signalverluste bei der Einkopplung optischer Signale in einen Wandler 1 moeglichst gering zu halten, ist in Hinblick auf die Verbindungsstelle (regelmaessig eine optische Grenzflaeche zwischen wenigstens zwei unterschiedlichen Medien) auf optimale Konzentrizitaet, Parallelitaet sowie auf minimalen axialen Abstand im Bereich der Anschlusstelle zu achten.

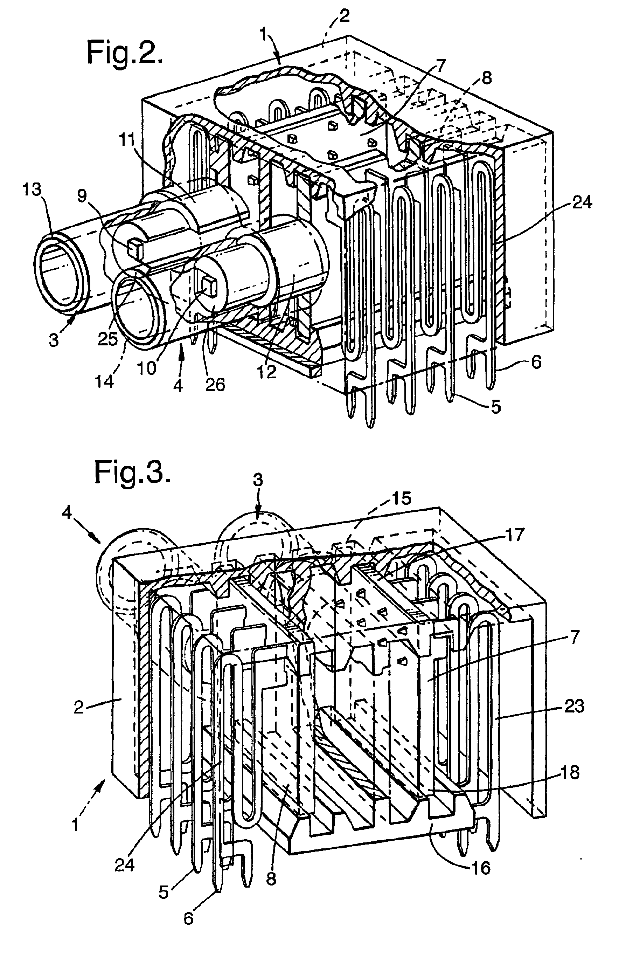

Wie insbesondere die Figuren 2 und 3 zeigen, ist jedes optoelektronische Modul 7,8 bewegbar in dem Gehaeuse 2 angeordnet und in Richtung auf den optischen Anschluss 3,4 federnd vorgespannt. Durch diese Massnahme wird ein axialer Abstand zwischen dem, an einem Ende eines zylindrischen Vorsprung 11,12 angeordneten, Chip 9,10 und einem nicht gezeigten Endstueck (Ferrule) eines optischen Leiters minimiert.

Wie ferner zu ersehen ist, wird die Ferrule und auch der Vorsprung 11,12 in denselben gehaeusefesten Zentrierkragen 13,14 eingeschoben, so dass deren Anordnung fuer geringe optische Verluste auch in axialer Richtung fluchtet.

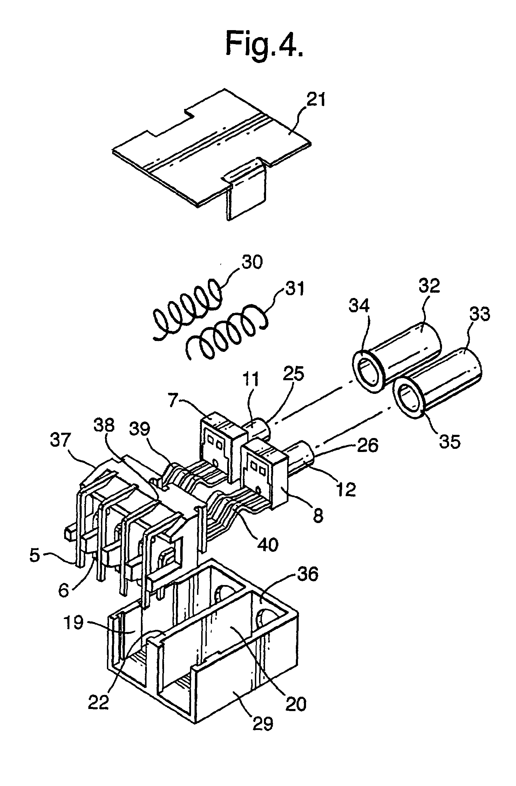

Fuer optimierte axiale Verschiebbarkeit sind nun an dem optoelelektronischen Modul 1 und an dem Gehaeuse 2 Linearfuehrungsmittel vorgesehen, so dass das optoelektronische Modul 7,8 relativ zu dem Gehaeuse 2 gefuehrt verschiebbar ist. Zu diesem Zweck ist es beispielsweise vorgesehen, an dem Gehaeuse Fuehrungsnuten 15,16 fuer modulseitige Fuehrungsabschnitte 17,18 anzuordnen. Es ist jedoch genauso denkbar, an dem Gehaeuse 2 einzelne Fuehrungsvorspruenge fuer modulseitige Fuehrungsflaechen vorzusehen. Bei der Ausfuehrungsform gemaess Figur 4 sind Fuehrungsschaechte 19,20 vorgesehen, welche zusammen mit einem Deckel 21 lediglich eine Bewegungsebene der optischen Module 7,8 zulassen.

Als elektromagnetische Abschirmung ist vorzugsweise an der Gehaeuseaussenseite weitgehend ganzflaechig eine metallische Schicht vorgesehen, welche entsprechende Induktionen vergleichbar einem Faraday schen Kaefig ableitet. Wenn das Gehaeuse 2 aus Kunststoff besteht, kann eine derartige metallische Schicht beispielsweise aufgedampft oder nasschemisch aufgebracht werden. Aus Gruenden der EMV-Abschirmung empfiehlt es sich ferner, zwischen zwei grundsaetzlich unabhaengigen optoelektronischen Modulen 7,8 eine abgeschirmte Wandung 22 vorzusehen, so dass eine
gegenseitige Beeinflussung unterschiedlicher Kanaele unterbleibt. Eine einfache, unkomplizierte Bauweise bei uneingeschraenkter axialer Bewegungsfaehigkeit des optoelektronischen Modul 7,8 wird dadurch bewirkt, dass es mittels einem flexiblen elektrischen Leiter mit dem elektrischen Anschluss verbunden ist. Besonders kostenguenstig ist eine Loesung gemaess der der Leiter gleichzeitig als Federelement 23,24 wirksam ist, und zwischen jeweils zwei endseitigen elektrischen Kontaktstellen wenigstens einen federnden Leiterabschnitt aufweist. Ein Ende des elektrischen, federnden Leiters ist jeweils gehaeusefest angeordnet, waehrend ein anderes Ende an dem optoelektronischen Modul 7,8 angreift. Die genaue Hoehe der Federvorspannkraft haengt im wesentlichen von dem Vorspannweg ab, den jedes Modul 7,8 macht. Die Vorspannkraft wird dadurch hervorgerufen, dass die Ferrule im Rahmen eines Einsteck- oder Arretiervorgangs in den Zentrierkragen 13,14 ein Vorderteil 25,26 des von einer anderen Seite in den Zentrierkragen 13,14 hineinragenden zylindrischen Vorsprungs 11,12 kontaktiert und diesen gegen die Federwirkung (des Federelementes 23,24) zurueckdrueckt, bis die Ferrule in die Fixierstellung gelangt ist. In dieser Fixierstellung erfolgt beispielsweise eine Schnappbefestigung der Ferrule an oder innerhalb dem optischen Anschluss 3,4. Die Erzeugung der Federwirkung durch das Einschieben einer Ferrule (und eine dadurch hervorgerufene Verschiebung der Module 7,8) geschieht auf grundsaetzlich gleiche Weise, wenn eine separate Feder 30,31 vorgesehen ist.

Grundsaetzlich ist der federnde elektrische Leiter in einem
kraftfreien Zustand (Fig. 1) eben und besteht aus einem elastisch federnden sowie leitfaehigen Material. Es versteht sich, dass der linearelastische Verformungsbereich (Hooke'scher Bereich) in jedem Montage- oder Betriebszustand keinesfalls ueberschritten werden darf. Es versteht sich ebenso, dass als Leiter ein mehrschichtiges Sandwichbauteil vorgesehen sein kann, welches mittels unterschiedlicher Schichten unterschiedliche Funktionen (Leiterfunktion, Federfunktion, Isolierfunktion, Haltefunktion) erfuellt. Wie aus der Figur ferner zu ersehen ist, bietet es sich an, mehrere gleichartige elektrisch leitende Federelemente 23,24 nebeneinander vorzusehen, deren Federraten sich zu einer Gesamtfederrate addieren. Schliesslich ist es denkbar, dass als Leiter ein FPC (Flexible Printed Circuit) vorgesehen ist, wobei die Miniaturisierung durchaus so weit gehen kann, dass der FPC unmittelbar elektrisch leitend an den optoelektronischen Chip angebondet ist.

Wie die Figuren 1 - 3 zeigen, weist der Leiter nach den vorliegenden Ausfuehrungsbeispielen eine serpentinen- oder schlangenlinienform auf, so dass auch die Anzahl der Serpentinen oder Windungen und insbesondere die Laenge des Federabschnittes die Federsteifigkeit beeinflusst.

Bei dem Ausfuehrungsbeispiel nach Figur 4 sind prinzipiell uebereinstimmende Bauteile mit gleichen Bezugsziffern versehen, so dass nachstehend im wesentlichen nur auf Unterschiede eingegangen wird.

Fuer jedes Modul 7,8 ist eine Feder 30,31 als separates

Bauteil vorgesehen, was ueber den Vorteil verfuegt, dass die elektrischen Eingenschaften des Leiters unabhaengig von dessen Federeigenschaften optimiert werden koennen. Es ist ferner eine separate Fuehrungshuelse 32,33 vorgesehen, welche von axial innen mit einem Bund 34,35 gegen eine Gehaeusewand 36 abestuetzt ist. Jede der Federn 30,31 stuetzt sich an einem Ende jedes Modul 7,8 und andererseits an einer Vorderwand eines Terminal 37,38 ab, so dass das Modul 7,8 jeweils in Richtung auf die Ferrule des optischen Leiters federnd vorgespannt ist. Somit wird der axiale Abstand zwischen den beiden Teilen automatisch minimiert.

Der Ausfuehrungsform nach der Figur 4 liegt darueber hinaus das folgende Montagekonzept zugrunde: In einem ersten Arbeitsschritt werden die Fuehrungshuelsen 32,33 auf einen zylindrischen Vorsprung 11,12 jedes optischen Moduls 7,8 aufgeschoben. Wie zu ersehen ist, ist jedes optische Modul 7,8 mit einem Terminal 37,38 elektrisch verdrahtet. Jedes Terminal 37,38 verfuegt ueber elektrische Anschluesse, welche ein Gehaeuse 29 nach aussen durchgreifen. Die Verdrahtung erfolgt beispielsweise mittels einem Flexible Printed Circuit (FCP) 39,40. Sodann kann jedes Modul 7,8 zusammen mit der jeweiligen Fuehrungshuelse 32,33 durch jeweils eine frontseitige Gehaeusebohrung einer Wand 36 gefuehrt und in den bereitstehenden Fuehrungsschacht 19,20 des Gehaeuse 29 eingesetzt werden. Jeder Fuehrungsschacht 19,20 fuer ein Modul 7,8 wird in axialer Richtung einerseits von der Wand 36 und andererseits von dem ebenfalls in das Gehaeuse 29 eingesetzten Terminal 37,38 begrenzt. Schliesslich erfolgt das

Einsetzen der Feder 30,31 welche die Federvorspannung jedes Moduls 7,8 in Richtung auf die Wand 36 bewirkt. In Weiterbildung der schematisierten Darstellung in der Figur empfielt es sich, Zentriermittel fuer jede der Federn 30,31 vorzusehen, welche nach Art von Federtellern oder Zentrierzapfen jeweils an Auflagestellen des optischen Moduls 7,8 und am Terminal 37,38 vorzusehen sind. Dies bewirkt eine dauerhaft sichere Funktion. In einem letzten Schritt wird das Gehaeuse 29 mittels einem vorzugsweise metallischen Deckel 21 geschlossen, welcher seitliche Laschen aufweist, die einerseits der Befestigung dienen, und andererseits die metallische Abschirmung im Sinne des zitierten Faraday'schen Kaefig kontaktieren.

Bei allen Ausfuehrungsformen lassen sich unerwuenschte Geraeusche insbesondere Klappern, wie folgt minimeren. Selbst wenn keine optische Ferrule in einen Anschluss eingeschoben ist, kann das optoelektronische Modul 7,8 unter federnder Vorspannkraft definiert an einen gehaeusefesten Anschlag anliegen. Mit anderen Worten wird dadurch verhindert, dass das optoelelektronische Modul 7,8 unter Ruettelbeanspruchung unkontrolliert an Teilen des Gehaeuses anschlagen an.

## Patentansprüche

1. Optoelektronischer Wandler (1) fuer die Wandlung optischer Signale in elektrische Signale und / oder umgekehrt, mit einem Gehaeuse (2,29), mit wenigstens einem gehaeusefesten optischen Anschluss (3,4) und mit wenigstens einem elektrischen Anschluss (5,6) fuer den Eingang und den Ausgang von jeweils in dem Wandler (1) umgesetzten elektrischen und / oder optischen Signalen, sowie mit einem in dem Gehaeuse (2,29) angeordneten optoelektronischen Modul (7,8), welches wenigstens einen optoelektronischen Chip (9,10) aufweist, **gekennzeichnet durch** ein bewegbar in dem Gehaeuse (2,29) angeordnetes optoelektronisches Modul (7,8), welches in Richtung auf den optischen Anschluss (3,4) federnd vorgespannt ist, so dass ein axialer Abstand zwischen dem optoelektronischen Chip (9,10) und dem optischen Anschluss (3,4) automatisch minimiert wird.

2. Optoelektronischer Wandler nach Anspruch 1, **dadurch gekennzeichnet, dass** jeweils das optoelektronische Modul (7,8) und das Gehaeuse (2,29) Linearfuehrungsmittel aufweisen, so dass das Modul (7,8) relativ zu dem Gehaeuse (2,29) gefuehrt verschiebbar ist.

3. Optoelektronischer Wandler nach Anspruch 2, **dadurch gekennzeichnet, dass** das Gehaeuse (2,29) mit Fuehrungsnuten 915,16) fuer Fuehrungsabschnitte (17,18) des optoelektronischen Modul (7,8) versehen ist.

4. Optoelektronischer Wandler nach Anspruch 2, **dadurch gekennzeichnet, dass** das Gehaeuse (2,29) mit Fuehrungsvorspruengen fuer Fuehrungsabschnitte (17,18) des optoelektronischen Modul (7,8) versehen ist.

5. Optoelektronischer Wandler nach Anspruch 2, **dadurch gekennzeichnet, dass** das Gehaeuse (29) Fuehrungsschaechte (19,20) fuer optoelektronische Module (7,8) aufweist.

6. Optoelektronischer Wandler nach einem oder mehreren der vorhergehenden Ansprueche, **dadurch gekennzeichnet, dass** das Gehaeuse (2,29) mit einer elektrisch leitenden sowie metallischen Abschirmung gegen elektromagnetische Stoerungen versehen ist.

7. Optoelektronischer Wandler nach einem oder mehreren der vorhergehenden Ansprueche der vorhergehenden Ansprueche, **dadurch gekennzeichnet, dass** das optoelektronische Modul (7,8) mittels einem flexiblen elektrischen Leiter mit dem elektrischen Anschluss (5,6) verbunden ist.

8. Optoelektronischer Wandler nach einem oder mehreren der vorhergehenden Ansprueche der vorhergehenden Ansprueche, **dadurch gekennzeichnet, dass** der elektrische Leiter gleichzeitig als Federelement (23,24) wirksam ist, und wenigstens einen federnden Leiterabschnitt zwischen zwei elektrischen Kontaktstellen aufweist.

9. Optoelektronischer Wandler nach einem oder mehreren der vorhergehenden Ansprueche, **dadurch gekennzeichnet, dass** der Leiter aus einem im kraftfreien Zustand ebenen, elastischen Material besteht.

10. Optoelektronischer Wandler nach einem oder mehreren der vorhergehenden Ansprueche, **dadurch gekennzeichnet, dass** der federnde Leiterabschnitt Windungen mit insbesondere serpentinen - oder schlangenlinienform aufweist, und dass die Federsteifigkeit von der Windungsanzahl des Leiters abhaengt.

11. Optoelektronischer Wandler nach wenigstens einem der Patentansprueche 8 bis 10, **dadurch gekennzeichnet, dass** mehrere untereinander gleichartige elektrisch leitende Federelemente (23,24) vorgesehen sind, deren einzelne Federraten sich zu einer Gesamtfederrate addieren.

12. Optoelektronischer Wandler nach einem oder mehreren der vorhergehenden Ansprueche, **dadurch gekennzeichnet, dass** als elektrischer Leiter ein FPC-Strang (39,40) vorgesehen ist.

13. Optoelektronischer Wandler nach einem oder mehreren der vorhergehenden Ansprueche, **dadurch gekennzeichnet, dass** ein separates Federelement (30,31) fuer die Erzeugung einer Federvorspannkraft fuer das optoelektronische Modul (7,8) vorgesehen ist.

14. Optoelektronischer Wandler nach einem oder mehreren der vorhergehenden Ansprueche, **dadurch gekennzeichnet, dass** jedes optoelektronische Modul (7,8) einen zylindrischen Vorsprung (11,12) aufweist, welcher in einer separaten Fuehrungshuelse (32,33) linear verschiebbar gefuehrt angeordnet ist.

15. Optoelektronischer Wandler nach einem oder mehreren der vorhergehenden Ansprueche, **dadurch gekennzeichnet, dass** die optoelektronischen Module (7,8) mit entsprechenden Anschluessen (3,4,5,6) und elektrischen Leitern jeweils paarweise in einem gemeinsamen Gehaeuse (2,29) angeordnet sind.

16. Optoelektronischer Wandler nach einem oder mehreren der vorhergehenden Ansprueche, **dadurch gekennzeichnet, dass** jedes optoelektronische Modul (7,8) dem keinerlei optischer Leiter zugeordnet ist, unter elastischer Vorspannkraft an einem gehaeusefesten Anschlag anliegt.
